## Europäisches Patentamt
## European Patent Office
## Office européen des brevets

(11) Numéro de publication: **0 324 291**
**A2**

# (12) DEMANDE DE BREVET EUROPEEN

(21) Numéro de dépôt: 88403105.5

(51) Int. Cl.⁴: **A21D 10/04**

(22) Date de dépôt: 07.12.88

(30) Priorité: 07.12.87 FR 8716991

(43) Date de publication de la demande:
19.07.89 Bulletin 89/29

(84) Etats contractants désignés:
**AT BE CH DE ES FR GB GR IT LI LU NL SE**

(71) Demandeur: **CONFISERIE CHOCOLATERIE PATIN**
**39, rue Pasteur**
**F-42000 Roanne(FR)**

(72) Inventeur: **Lafage Christian Charles**
**8, rue des Hespérides**
**F-54600 Villers Les Nancy(FR)**
Inventeur: **Chauvin Louis Bernard**
**Les Muscardières, le Vieil Baugé**
**F-49150 Baugé(FR)**

(74) Mandataire: **Derambure, Christian et al**
**BUGNION ASSOCIES 55, rue Boissonade**
**F-75014 Paris(FR)**

(54) **Procédé et installation de préparation d'une pâte à usage alimentaire et plus spécialement pâte à crêpe.**

(57) Procédé de préparation d'une composition alimentaire amylacée destinée à être cuisinée, notamment à chaud, par l'utilisateur, caractérisé en ce que l'on prépare séparément une phase aqueuse protéïque et une phase amylacée ; on assure l'état stérile de chacune des deux phases ; on mélange à froid et stérilement les deux phases, sans gélification substantielle ; et, enfin on stocke stérilement la composition ainsi préparé et prête à l'emploi jusqu'à son emploi par l'utilisateur, de manière que la gélification de l'amidon n'intervienne essentiellement que lorsque la composition alimentaire est cuisinée par l'utilisateur.

EP 0 324 291 A2

# PROCEDE ET INSTALLATION DE PREPARATION D'UNE PATE A USAGE ALIMENTAIRE ET PLUS SPECIALEMENT PATE A CREPE.

L'invention concerne un procédé et une installation de préparation d'une pâte à usage alimentaire, plus spécialement pâte à crêpe ou équivalent.

Une pâte de cuisine ou de pâtisserie est un mélange de farine et d'eau avec, selon les nécessités, addition de levain, de corps gras (beurre ou huile ou margarine), de sel, d'oeufs (blanc et jaune), de lait (remplaçant totalement ou partiellement l'eau ou ajouté à celle-ci), de sucre, d'autres composants selon l'usage, le goût, l'aspect recherchés.

La farine a notamment pour fonction d'assurer la cohésion de la pâte. L'eau (et/ou le lait) permet la dissolution du sel, du sucre, etc... Les corps gras ont pour fonction notamment de donner à la pâte sa texture. Les oeufs ont pour fonction notamment de faciliter l'émulsification des corps gras, d'augmenter la résistance de la pâte une fois cuite, d'alléger la pâte (blancs battus) ou de provoquer la dorure (jaunes). On connaît de nombreuses recettes ménagères correspondant à différentes pâtes, recettes caractérisées chacune par des proportions spécifiques et une méthode de préparation donnée.

Pour s'en tenir au cas particulier, mais non limitatif, de la pâte à crêpe, les recettes ménagères suivantes sont données dans le "LAROUSSE GASTRONOMIQUE", édition 1984, pages 327 et 328 : "pâtes à crêpe salées. Tamiser 500g de farine de froment dans une jatte. Ajouter cinq ou six oeufs battus en omelette avec une grosse pincée de sel ; bien mélanger. Délayer ensuite en ajoutant un litre de lait ou, pour des crêpes plus légères, un demi-litre de lait et un demi-litre d'eau. On peut aussi délayer la pâte avec un demi-litre de bière et un demi-litre de lait, ou remplacer le lait par du consommé blanc. Ajouter enfin trois cuillerées à soupe d'une huile sans goût (arachide ou tournesol) ou, au contraire, suivant les utilisations, d'huile d'olive. (on peut ajouter encore 25g de beurre fondu). laisser reposer deux heures. Au moment de confectionner les crêpes, allonger la pâte avec un peu d'eau (de 1 à 2 dl)...

...

Pâtes à crêpe sucrées. Tamiser 500g de farine de froment dans une jatte. Ajouter un sachet de sucre vanillé (ou quelques gouttes de vanille liquide) et cinq ou six oeufs battus en omelette avec une petite pincée de sel ; bien mélanger. Délayer en ajoutant trois quart de litre de lait et un quart de litre d'eau. Parfumer avec un petit verre de rhum ... suivant l'usage local. Ajoute enfin 40g de beurre fondu ou bien 25g de beurre fondu et deux cuillerées à soupe d'huile. Laisser reposer deux heures ..."

Ainsi que cela résulte de ce qui précède et de la pratique bien connue, de telles pâtes à usage alimentaire sont préparées à partir des constituants de base, par l'utilisateur soi-même, juste avant l'emploi (compte tenu de la période de repos éventuellement nécessaire). De plus, il est généralement nécessaire de préparer une quantité suffisamment importante de pâte.

On connaît également diverses variantes de compositions décrites en particulier dans les documents FR - 2 067 991, FR - 2 169 632, et FR 2 285 814.

Le document FR 2 225 093 décrit un procédé pour préparer une pâte à gâteau prête à l'usage pouvant être gardée pendant plusieurs semaines dans une armoire frigorifique et qui comprend de l'oeuf complet (blanc et jaune), du sucre, de la graisse et de la farine. On chauffe l'oeuf et du sucre pour pasteuriser l'oeuf sans le dénaturer, on refroidit cette phase, on la souffle en présence d'un agent épaississant pour affermir la mousse. On chauffe la graisse et la farine pour pasteuriser la farine sans la dégrader, on refroidit cette phase. On mélange les deux phases pour obtenir une pâte à gâteau et on emballe ce mélange.

Le document FR 2 150 535 propose une poudre fluide propre à la préparation d'une pâte à fourrer sucrée qui comprend du sucre, une matière protéique d'origine végétale et de l'amidon prégélatinisé.

Selon d'autres documents de l'état antérieur de la technique, on substitue totalement ou partiellement aux glucides et/ou protéines de la farine, de la farine de millet ou de soja dénaturé, du caséinate de calcium (voir documents BE 899 597 et EP 143 391).

Selon le document EP 0195 365, on substitue aux oeufs des protéines et lipides gélifiables isolés respectivement à partir du petit lait ou d'origine végétale ou animale.

Selon le document FR 2 501 472, on prépare une composition de pâte à crêpe ou analogue apte à être conservée par congélation. .

Selon le document US 4 504 510, on prépare une pâte pouvant être gardée au réfrigérateur.

Le document US 3 353 932 prévoit d'allonger la durée de stockage au réfrigérateur.

Par ailleurs, le document US 4 247 573 décrit un substitut du blanc d'oeuf à usage alimentaire susceptible de présenter les mêmes fonctions que celui-ci, grâce à des protéines micellaires.

Toutefois, ces documents de l'état antérieur de la technique ne décrivent généralement pas une pâte alimentaire telle que notamment mais non exclusivement une pâte à crêpe, qui simultanément puisse être stockée prête à l'emploi et à température ambiante pour une longue durée. L'invention a donc pour premier objet de proposer une telle pâte alimentaire et son procédé de préparation.

S'agissant du procédé décrit dans le document FR 2 225 093, il concerne la fabrication d'un gâteau, plutôt que d'une crêpe ou équivalent selon l'invention ; stockable à une température de 5°C pendant seulement plusieurs semaines, plutôt qu'hors froid à une température pouvant être plus élevée -la température ambiante- pendant une durée maximale nettement supérieure -de l'ordre de plusieurs mois- selon l'invention ; comprenant de l'oeuf complet donc y compris le blanc, c'est-à-dire une protéine thermocoagulable, non stérilisable par la chaleur sans coagulation, plutôt qu'un rétentat laitier, c'est-à-dire une protéine stérilisable par la chaleur sans coagulation selon l'invention ; avec une augmentation de la viscosité en vue de l'obtention d'une mousse ferme, plutôt que généralement une limitation de la viscosité, sans mousse, pour un bot étalement ultérieur, selon l'invention ; comprenant le mélange de deux phases pasteurisées, plutôt que stérilisées, selon l'invention ; avec une activité en eau limitée par addition de glycérol, plutôt qu'avec une activité en eau forte, selon l'invention.

Le document US 2 965 500 concerne un produit alimentaire pouvant être gardé, indéfiniment, dans des containers fermés à température ambiante. Ce produit est obtenu à partir de deux formulations mélangées l'une avec l'autre, à savoir une première formulation à base de farine et de sel et une seconde formulation à base de sel, sucre, huile et lait. Toutefois, ce produit ne ressemble pas véritablement à une crêpe dans le sens où on l'entend dans le préambule. En effet, il ne comporte pas d'oeufs. Et, on sait que le blanc d'oeuf combiné au traitement thermique pose de sérieux problèmes. Il en est d'ailleurs de même de la réactivité eau-farine dans le même contexte (traitement thermique) d'où, probablement la situation "phases sèches" que prévoit ce brevet.

Selon l'invention, il est proposé un procédé de préparation d'une pâte alimentaire et plus spécialement pâte à crêpe destinée à être cuisinée, notamment à chaud, par l'utilisateur dans lequel on prépare séparément deux phases ; on chauffe chacune des deux phases ; on mélange à froid les deux phases; et, enfin on stocke de façon aseptique la composition ainsi préparée et prête à l'emploi jusqu'à son emploi par l'utilisateur caractérisé en ce que l'on prépare, d'une part, une phase amylacée à partir au moins de farine ou équivalent et d'huile ou équivalent et, d'autre part, une phase aqueuse protéique à partir au moins de protéines, eau, sel, matière grasse ou équivalents respectifs ;

on assure l'état stérile de chacune des deux phases et de leur mélange ; on stocke la pâte alimentaire ainsi préparée, y compris à température ambiante, sur une longue durée.

L'invention propose donc une pâte à usage alimentaire, notamment pâte à crêpe ou équivalent, réalisée par ce procédé et présentée prête à l'emploi dans un conditionnement aseptique, stockable en longue durée à température ambiante.

Enfin, l'invention propose une installation pour la préparation d'une pâte alimentaire et plus spécialement pâte à crêpe destinée à être cuisinée notamment à chaud, caractérisée en ce qu'elle comporte au moins deux lignes séparées de préparation à l'état stérile d'une phase amylacée et d'une phase aqueuse protéique ; au moins une unité de mélange aseptique en sortie aval des deux lignes ; au moins une unité de conditionnement aseptique en sortie aval d'une unité de mélange aseptique ; une ligne de préparation d'une phase comportant d'amont en aval des moyens d'amenée des constituants de la phase ; une unité de mélange des constituants ; une unité de stérilisation ; et une unité de refroidissement de la phase ainsi stérilisée ; les lignes de préparation des phases protéique; la ou les unités de mélange aseptique ; la ou les unités de conditionnement aseptique fonctionnent toutes ou seulement pour partie en continu, en combinaison ; l'unité du mélange aseptique des phases, l'unité de conditionnement aseptique fonctionnant à température ambiante.

Sans qu'il soit besoin de longues explications, on comprend l'intérêt que présente pour l'utilisateur une pâte alimentaire et plus spécialement une pâte à crêpe prête à l'emploi et stockable en longue durée et à température ambiante selon l'invention, et la supériorité sur un stockage de durée limitée à quelques semaines et à froid : facilité de stockage, bonne conservation, possibilité de fractionnement en doses unitaires appropriées, polyvalence d'emploi etc... De plus, une telle pâte alimentaire (pâte à crêpe) selon l'invention peut être obtenue au moyen de procédé et d'installation susceptibles de fonctionner en continu, industrialisables à des conditions économiques satisfaisantes. Une telle pâte alimentaire (pâte à crêpe) selon l'invention présente comme caractéristique remarquable d'avoir d'excellentes qualités gustatives. Enfin une telle pâte alimentaire (pâte à crêpe) selon l'invention prête à l'emploi, stockable à température ambiante et en longue durée, stérile, présente des supériorités incontestables non seulement sur des pâtes ménagères dont la préparation est longue et fastidieuse et nécessite d'avoir à disposition tous les ingrédients constitutifs, mais aussi sur les pâtes devant être stockées au réfrigérateur ou au congélateur (document FR 2 225 093) ou encore sur les produits présentés séchés qui nécessitent d'être reconstitués au moment de l'utilisation dans un milieu aqueux (document EP n° 0 195 365) ou encore sur des produits stockables à température ambiante mais de nature différente (document US 2 965 500).

Les autres caractéristiques de l'invention résulteront de la description qui suit.

L'invention propose un procédé de préparation d'une pâte alimentaire (plus spécialement une pâte à crêpe) amylacée destinée à être cuisinée, notamment à chaud, par l'utilisateur.

Bien que l'invention ne soit pas limitée au cas d'une composition devant être cuisinée à chaud par l'utilisateur, ce cas paraît devoir être le plus fréquent et c'est précisément celui mis en oeuvre avec une pâte à crêpe ou équivalent.

On prépare séparément une phase amylacée et une phase aqueuse protéique; on assure l'état stérile de chacune des deux phases ; on mélange à froid et stérilement les deux phases, sans gélification substantielle ; et, enfin, on stocke stérilement, la composition ainsi préparée et prête à l'emploi jusqu'à son emploi par l'utilisateur, ce qui a pour effet que la gélification de l'amidon intervient essentiellement lorsque la composition alimentaire est cuisinée à chaud par l'utilisateur.

Selon une première variante, pour assurer l'état stérile d'une phase, on part de constituants eux-mêmes stériles et on les mélange de façon stérile pour constituer la phase correspondante stérile.

Selon une seconde variante, combinable ou non à la première variante mentionnée précédemment, pour assurer l'état stérile d'une phase, on réalise une étape spécifique de stérilisation. Cette étape de stérilisation intervient alors au cours même de la préparation de la phase correspondante. Cette étape spécifique de stérilisation est, par exemple, dans une première sous variante une stérilisation thermique et/ou notamment par microonde ou dans une seconde sous variante une stérilisation physique notamment par irradiation, U.V, ionisation, ultra-sons, par gaz, etc...

Selon l'invention, on stocke stérilement la composition alimentaire ainsi préparée dans un conditionnement aseptique et à température ambiante. Ce stockage peut être de longue durée, c'est-à-dire dépasser plusieurs mois.

L'expression "phase" utilisée dans le texte doit être comprise dans son acception la plus large comme signifiant une certaine masse ou quantité d'un ou plusieurs constituants groupés ensemble, de façon homogène ou non, cette masse ou quantité pouvant être individualisée en tant que telle. Des mots équivalents à "phase", dans le contexte de la présente invention, sont donc : composition, mélange, partie, etc...

Les compositions quantitatives et qualitatives des phases amylacée et aqueuse protéique sont décrites ultérieurement plus en détail. D'une façon générale, une phase amylacée comporte de l'amidon et ou des produits à base ou contenant de l'amidon, sous quelque forme que ce soit ; et une phase aqueuse protéique comporte une ou plusieurs matières protéiques, directement ou incorporées à d'autres ingrédients, ainsi que de l'eau ou, plus généralement, un liquide tel que la phase aqueuse protéique présente, dans son ensemble, une consistance plutôt fluide allant du très liquide au pâteux, par opposition à la phase amylacée qui présente une consistance solide ou pâteuse pouvant aller jusqu'au fluide. Au total une pâte à crêpe est assez fluide pour pouvoir être versée et étalée.

On entend par état stérile, un état tel que la phase ou la composition qui présente cet état ne contienne aucun germe pathogène ni aucun germe capable d'être ou de se revivifier dans les conditions de fabrication et de stockage du produit fini, ou d'altérer de quelque façon que ce soit ce produit durant ces phases.

On entend par mélange des deux ou plusieurs phases, le fait de les mettre ensemble avec un certain degré d'homogénéisation de ces phases l'une (ou les unes) par rapport à l'autre (ou aux autres), sans pour autant que le résultat de cette opération conduise nécessairement à un mélange strictement homogène.

On entend par mélange à froid, un mélange qui est effectué à température ambiante, c'est-à-dire notamment dans la gamme allant par exemple de l'ordre d'une dizaine à l'ordre d'une trentaine ou quarantaine de degrés Celcius voire plus.

On entend par absence de gélification substantielle, le fait qu'il puisse y avoir éventuellement une légère gélification mais non une gélification importante qui ferait prendre en masse le produit et le rendrait difficilement utilisable par l'utilisateur.

On entend par préparation séparée de la phase amylacée et de la phase aqueuse protéique, le fait que ces deux phases sont individualisées l'une par rapport à l'autre. Une telle séparation est réalisée dans le temps et/ou l'espace. Un cas typique est celui où les deux phases sont préparées plus ou moins simultanément mais sur les lignes de préparation distinctes.

On entend par crêpe le produit alimentaire du type général de celui défini sous ce nom par l'usage tel que rappelé ci-dessus, quels que soient, d'une part, les qualificatifs apportés, et, d'autre part, les autres noms donnés se référant au même concept (pancakes, galette, etc...). Dans le cas de la pâte à crêpe ou équivalent, la phase amylacée est préparée à partir, au moins, de farine ou équivalent et d'huile ou équivalent; et la phase aqueuse protéique est préparée à partir, au moins, de protéines ainsi qu'il est décrit ci-dessous, d'eau, de sel, de matière grasse ou équivalents respectifs.

On utilise pour les protéines de la phase aqueuse protéique, une formulation à base de rétentat laitier issu d'ultrafiltration ou équivalent. Plus précisément, on choisit une formulation à base de rétentat laitier issu d'ultrafiltration dont les matières protéiques sont coagulables notamment dans les conditions -notamment de température- auxquelles la pâte doit être cuisinée par l'utilisateur sans, toutefois, être substantiellement coagulées, auparavant, notamment lors d'une éventuelle étape de stérilisation thermique.

De plus, et en combinaison, la phase aqueuse protéique est dépourvue de blanc d'oeuf non coagulé ou équivalent susceptible de coaguler à faible température notamment lors d'une stérilisation thermique.

Le rétentat laitier issu d'ultrafiltration est composé, d'une ou plusieurs matières protéiques non solubles, notamment de la caséine; d'une ou plusieurs matières protéiques solubles sériques; de matière grasse animale laitière ; de sucre, notamment et principalement de lactose; et d'un ou plusieurs minéraux tels que calcium, sodium, phosphore.

Les compositions qualitative et quantitative du rétentat laitier issu d'ultrafiltration, entre les différents composants qui viennent d'être indiqués, dépendent notamment de la stabilité à la chaleur recherchée en fonction, entre autre, du traitement de stérilisation envisagé et du traitement devant être effectué, normalement, par l'utilisateur. Les compositions qualitative et quantitative possibles sont à la portée de l'homme du métier dès lors que les conditions de stabilité requises ont été préalablement déterminées. L'homme du métier sait, en particulier, que la stabilité à la chaleur d'un rétentat laitier est fonction, notamment, de sa concentration protéique, de son pH, de la proportion de protéines solubles thermocoagulables, de la concentration en sucre et en minéraux, de la concentration en eau, de la nature et de la quantité de matière grasse et enfin, des conditions du traitement thermique appliqué.

Préférentiellement, on prépare un concentré protéique laitier fort qui est ensuite dilué à l'eau, plutôt qu'avec le perméat.

Egalement, préférentiellement, on réduit le taux de matière grasse laitière dans le rétentat laitier utilisé puis on complète cette matière grasse laitière animale par la proportion convenable de matière grasse végétale à point de fusion approprié telle qu'une huile végétale ménagère.

Egalement, préférentiellement, on met en oeuvre un rétentat laitier à teneur réduite en lactose et en minéraux, en vue d'une stabilité améliorée.

Le cas échéant, la phase aqueuse protéique contient également du sucre, en particulier dans le cas où la pâte est destinée à la réalisation d'un produit final plutôt sucré.

Comme eau de la phase protéique, on utilise l'eau du rétentat laitier issu d'ultrafiltration et/ou de l'eau extrinsèque au rétentat laitier.

Comme matière grasse de la phase aqueuse protéique, on utilise la matière grasse issue du lait et/ou du jaune d'oeuf et/ou de la lécithine et/ou équivalent. L'emploi de jaune d'oeuf répond, en particulier, au souci de réaliser une pâte aussi proche que possible de la composition ménagère (couleur, goût, etc ..).

De plus, le jaune d'oeuf a pour fonction de favoriser l'homogénéité du produit final.

Le cas échéant, on ajoute à la phase aqueuse protéique d'autres composants, notamment inertes, non gélifiables, tels qu'une charge apportant de la nature sèche, en particulier une ou plusieurs farines ou équivalent. Des farines telles que la farine de cellulose ou la farine de son de blé conviennent bien en ce qu'elles ne modifient pas substantiellement les qualités requises pour la phase aqueuse protéique tout en ayant l'avantage de procurer un apport substantiel de matière sèche non grasse. De façon remarquable, cet apport de matière sèche non grasse n'affecte pas la fonction structurante des protéines employées dans la pâte finalement réalisée, au moment où elle est cuisinée. Le cas échéant, cette farine constituant une charge est elle-même diluée dans de l'huile notamment végétale.

Des compositions du rétentat laitier issu d'ultrafiltration ayant conduit à de bons résultats sont, pour les matières protéiques, de 120 à 180, et notamment de l'ordre de 140g par litre environ et, pour les matières grasses, de 40 à 120 et notamment de l'ordre de 50g par litre environ. Ces valeurs correspondent au cas préférentiel ou on pousse l'ultrafiltration et donc on augmente les concentrations ce qui a pour effet d'éliminer l'eau, le sucre et les minéraux. Et on redilue ultérieurement préférentiellement à l'eau. En variante on peut partir d'un rétentat moins concentré.

La phase aqueuse protéique comprend (exprimé en poids) de 48% à 62%, et notamment de l'ordre de 55%, de rétentat laitier issu d'ultrafiltration; de 30% à 41%, et notamment de l'ordre de 37% d'eau ; de 5% à 11 %, et notamment de l'ordre de 8%, d'autres composants (sel, matière grasse notamment).

Dans une forme de réalisation possible, ou stérilise une telle phase aqueuse protéique par traitement thermique traditionnel et/ou notamment par micro-ondes à une température de l'ordre de 125°C, pendant une durée de l'ordre de quelques minutes, par exemple d'environ 3 à 4 minutes. Le traitement à une telle témperature, en vue de la stérilisation est rendu possible, notamment, par la composition de la phase aqueuse protéique surtout en ce qui concerne les protéines.

S'agissant de la phase amylacée, on utilise préférentiellement comme huile, de l'huile végétale, capable de résister aux températures élevées (notamment celles requises par une stérilisation thermique) et comme farine de la farine de blé ou encore de sarasin, de maïs, d'orge ou équivalent. Toutefois, d'autres types de farine sont envisageables, dès lors qu'elles sont compatibles avec les qualités, notamment gustatives, requìses.

La composition de la phase amylacée (exprimée en poids) peut être de 50% à 80%, et notamment de l'ordre de 70%, de farine et de 20% à 50% et notamment de l'ordre de 30%, d'huile.

Dans une forme de réalisation possible, on stérilise la phase amylacée par traitement thermique égal ou équivalent à celui correspondant à une température de l'ordre de 140° C à 180° C pendant une durée de l'ordre de quelques minutes à environ 60 minutes suivant le principe du traitement agité (en circuit ou en batch), dans la limite de non dégradation de la phase grasse.

Préférentiellement, la stérilisation de la phase amylacée est effectuée très rapidement, notamment par chauffage micro-ondes, afin d'éviter de modifier substantiellement celle-ci.

Le cas échéant, et pour autant que cela soit nécessaire, en fonction notamment de la destination de la pâte réalisée, on ajoute à l'une ou/et l'autre des deux phases, ou aux deux phases lors de leur mélange ou encore après mélange des deux phases un ou plusieurs composants ou phases supplémentaires notamment de goût et/ou d'aspect et/ou d'arôme, à l'état solide, pâteux, fluide. Par exemple, il peut s'agir de composants aqueux, tels qu'une compote ou des morceaux de fruits, ajoutés aux deux phases, composant incompatible avec la phase amylacée à cause de son caractère aqueux.

S'agissant des quantités relatives de la phase amylacée et de la phase aqueuse protéique, on peut mélanger (exprimé en poids) de 65% à 85%, et notamment de l'ordre de 75%, de la phase aqueuse protéique et de 15% à 35%, plus spécialement de 20% à 30%, et notamment de l'ordre de 25%, de la phase amylacée.

On réalise le mélange des deux phases amylacée et aqueuse protéique à température ambiante c'est-à-dire à toute température appropriée inférieure à la température limite supérieure où la gélification de l'amidon en présence d'un phase aqueuse est négligeable. Cette température limite supérieure étant de l'ordre de 70° C.

Selon d'autres caractéristiques opératoires du procédé, on assure d'une part l'état stérile des deux phases, notamment par un traitement thermique spécifique de stérilisation, et, d'autre part, le mélange des deux phases, en continu et de façon stérile. Les mêmes caractéristiques s'appliquent aux composants ou phases supplémentaires.

L'invention concerne, aussi, une pâte à usage alimentaire, plus spécialement une pâte à crêpe ou équivalent qui, outre le fait qu'elle est réalisée par le procédé spécifique décrit, est présentée prête à l'emploi dans un conditionnement aseptique, stockable à température ambiante pour une longue durée. De tels conditionnements aseptiques sont bien connus en soi dans l'industrie alimentaire pour le lait et d'autres produits. Il peut s'agir de cartons, de poches plastiques aseptiques, de boîtes de conserve, etc ...

L'invention concerne, enfin, une installation pour la mise en oeuvre du procédé qui comporte au moins deux lignes séparées de préparation à l'état stérile d'une phase amylacée et d'une phase aqueuse protéique; au moins une unité de mélange aseptique en sortie aval des lignes; et au moins une unité de conditionnement aseptique en sortie aval à une unité de mélange aseptique. Les définitions précédemment données en ce qui concerne le procédé, relativement aux notions de phase, de séparation, le caractère aseptique, etc ... sont applicables de même manière à l'installation. En particulier, l'installation peut ne comporter, structurellement, qu'une seule ligne de préparation fonctionnant selon deux ou plus séquences séparées dans le temps. Toutefois, dans le cas général, l'installation comporte deux lignes matériellement distinctes, les deux phases à préparer étant très différentes l'une de l'autre. Dans la mesure où au moins une troisième phase est prévue, l'installation comporte alors, également au moins une troisième ligne distincte des deux premières lignes.

Préférentiellement, et notamment pour des impératifs de productivité, d'industrialisation du procédé et enfin de maintien du caractère stérile, les lignes de préparation des phases ; la ou les unités de mélange aseptique; et la ou les unités de conditionnement aseptique, fonctionnent toutes (ou seulement pour partie) en continu, en combinaison.

D'une façon générale, une ligne de préparation d'une phase comporte, d'amont en aval, des moyens d'amenée des constituants de la phase; une unité de mélange des constituants à la température nécessaire; une unité de stérilisation; et une unité de refroidissement, naturel ou forcé, de la phase ainsi stérilisée, pour autant que cela soit nécessaire. On entend par refroidissement naturel, le refroidissement qui s'opère naturellement par contact direct ou indirect avec l'atmosphère ambiante. Le refroidissement forcé est, par opposition, un refroidissement résultant de la mise en oeuvre de moyens positifs et spécifiques de refroidissement. L'unité de refroidissement n'est optionnelle que pour autant que la phase soit portée à une température excessive, notamment pour son mélange, sa constitution ou sa stérilisation.

L'unité de stérilisation peut fonctionner par stérilisation thermique notamment par micro-ondes. Toutefois, d'autres variantes d'unité de stérilisation, par irradiation notamment, peuvent être employées.

L'unité de mélange aseptique des deux phases et/ou l'unité de conditionnement aseptique fonctionne normalement à température ambiante.

Dans le cas d'une troisième ligne, celle-ci peut être agencée, par exemple, pour venir rejoindre les deux premières lignes en aval ou dans leur unité de mélange.

L'invention peut faire l'objet, naturellement, d'autres variantes de réalisation.

## Revendications

1) Procédé de préparation d'une pâte alimentaire et plus spécialement pâte à crêpe destinée à être cuisinée, notamment à chaud, par l'utilisateur dans lequel on prépare séparément deux phases ; on chauffe chacune des deux phases ; on mélange à froid les deux phases; et, enfin on stocke de façon aseptique la composition ainsi préparée et prête à l'emploi jusqu'à son emploi par l'utilisateur caractérisé en ce que l'on prépare, d'une part, une phase amylacée à partir au moins de farine ou équivalent et d'huile ou équivalent et, d'autre part, une phase aqueuse protéique à partir au moins de protéines, eau, sel, matière grasse ou équivalents respectifs ; on assure l'état stérile de chacune des deux phases et de leur mélange ; on stocke la pâte alimentaire ainsi préparée, y compris à température ambiante, sur une longue durée.

2) Procédé selon la revendication 1, caractérisé en ce que l'on utilise pour les protéines de la phase aqueuse protéique une formulation à base de rétentat laitier issu d'ultrafiltration ou équivalent.

3) Procédé selon l'une quelconque des revendications 1 et 2, caractérisé en ce que l'on choisit une formulation à base de rétentat laitier issu d'ultrafiltration dont les matières protéiques sont coagulables notamment en grande partie dans les conditions, notamment de température, auxquelles la pâte est cuisinée par l'utilisateur ; sans toutefois être substantiellement coagulées, auparavant, notamment lors d'une éventuelle étape de stérilisation thermique.

4) Procédé selon l'une quelconque des revendications 1 à 3, caractérisé en ce que la phase aqueuse protéique est dépourvue de blanc d'oeuf non coagulé ou équivalent susceptible de coaguler à faible température.

5) Procédé selon l'une quelconque des revendications 1 à 4, caractérisé en ce que le rétentat laitier issu d'ultrafiltration est composé au moins d'une matière protéique non soluble, notamment de la caséine, d'une matière protéique soluble sérique, de matière grasse animale laitière, de sucre, notamment lactose, d'un minéral.

6) Procédé selon l'une quelconque des revendications 1 à 5, caractérisé en ce que la phase aqueuse protéique contient également du sucre.

7) Procédé selon l'une quelconque des revendications 1 à 6, caractérisé en ce que l'on utilise comme eau de la phase aqueuse protéique, l'eau du rétentat laitier issu d'ultrafiltration et/ou de l'eau extrinsèque au rétentat laitier.

8) Procédé selon l'une quelconque des revendications 1 à 7, caractérisé en ce que l'on utilise comme matière grasse de la phase aqueuse protéique, la matière grasse issue du lait et/ou du jaune d'oeuf et/ou de la lécithine et/ou équivalent.

9) Procédé selon l'une quelconque des revendications 1 à 8, caractérisé en ce que l'on utilise comme huile de la phase amylacée de l'huile végétale résistante aux températures élevées.

10) Procédé selon l'une quelconque des revendications 1 à 9, caractérisé en ce que l'on utilise comme farine de la phase amylacée de la farine de blé, sarazin, maïs, orge ou équivalent.

11) Procédé selon l'une quelconque des revendications 1 à 10, caractérisé en ce que l'on ajoute également à la phase aqueuse protéique d'autres composants notamment inertes, non gélifiables, tels qu'une charge apportant de la matière sèche, en particulier une ou des farine ou équivalent.

12) Procédé selon l'une quelconque des revendications 1 à 11, caractérisé en ce que l'on ajoute à l'une ou/et l'autre des deux phases, ou au deux phases lors de leur mélange ou après mélange un ou plusieurs composants ou phases supplémentaires notamment de goût et/ou d'aspect et/ou d'arôme, solide, pâteux, fluide.

13) Procédé selon l'une quelconque des revendications 1 à 12, caractérisé en ce que le rétentat laitier issu d'ultrafiltration comprend de 120 à 180, et notamment de l'ordre de 140, grammes par litre, environ, de matières protéiques et de 40 à 120, et notamment de l'ordre de 50, grammes par litre, environ, de matières grasses.

14) Procédé selon l'une quelconque des revendications 1 à 13, caractérisé en ce que la phase aqueuse protéique comprend (en poids) de 48% à 62%, et notamment de l'ordre de 55%, de rétentat laitier issu d'ultrafiltration ; de 30% à 41%, et notamment de l'ordre de 37%, d'eau ; de 5% à 11%, et notamment de l'ordre de 8%, d'autres composants (sel, matière grasse notamment).

15) Procédé selon l'une quelconque des revendications 1 à 14, caractérisé en ce que la phase amylacée comprend (en poids) de 50% à 80%, et notamment de l'ordre de 70%, de farine et de 20% à 50%, et notamment de l'ordre de 30%, d'huile.

16) Procédé selon l'une quelconque des revendications 1 à 15, caractérisé en ce que l'on mélange (en poids) de 65% à 85%, et notamment de l'ordre de 75%, de la phase aqueuse protéique et de 15% à 35%, plus spécialement de 20% à 35%, et notamment de l'ordre de 25% de la phase amylacée.

17) Procédé selon l'une quelconque des revendications 1 à 16, caractérisé en ce que l'on stérilise la phase aqueuse protéique par traitement thermique à une une température de l'ordre de 125° C pendant une durée de quelques minutes, notamment de l'ordre de trois à quatre minutes.

18) Procédé selon l'une quelconque des revendicatiosn 1 à 17, caractérisé en ce que l'on stérilise la phase amylacée par traitement thermique égal ou équivalent à celui correspondant à une température de l'ordre de 140° C à 180° C pendant une durée de quelques minutes à environ 60 minutes dans la limite de non dégradation de la phase grasse.

19) Procédé selon l'une quelconque des revendications 1 à 18, caractérisé en ce que l'on réalise le mélange des deux phases amylacée et aqueuse protéique à température ambiante appropriée.

·20) Procédé selon l'une quelconque des revendications 1 à 19, caractérisé en ce que l'on assure d'une part l'état stérile des deux phases, notamment par un traitement thermique spécifique, d'autre part le mélange des deux phases, en continu stérilement.

21) Installation pour la préparation d'une pâte alimentaire et plus spécialement pâte à crêpe destinée à être cuisinée notamment à chaud, caractérisée en ce qu'elle comporte au moins deux lignes séparées de préparation à l'état stérile d'une phase amylacée et d'une phase aqueuse protéique ; au moins une unité de mélange aseptique en sortie aval des deux lignes ; au moins une unité de conditionnement aseptique en sortie aval d'une unité de mélange aseptique ; une ligne de préparation d'une phase comportant d'amont en aval des moyens d'amenée des constituants de la phase ; une unité de mélange des constituants ; une unité de stérilisation ; et une unité de refroidissement de la phase ainsi stérilisée ; les lignes de préparation des phases protéique ; la ou les unités de mélange aseptique ; la ou les unités de conditionnement aseptique fonctionnent toutes ou seulement pour partie en continu, en combinaison ; l'unité de mélange aseptique des phases, l'unité de conditionnement aseptique fonctionnant à température ambiante.

22) Installation selon la revendication 21, caractérisée en ce qu'elle comporte également au moins une troisième ligne pour une troisième phase venant rejoindre les deux premières lignes en aval ou dans leur unité de mélange.